Europäisches Patentamt

(19) European Patent Office

Office européen des brevets

(11) Numéro de publication : **0 281 445 B1**

(12) **FASCICULE DE BREVET EUROPEEN**

(45) Date de publication du fascicule du brevet :
05.06.91 Bulletin 91/23

(51) Int. Cl.⁵ : **B60N 2/02**

(21) Numéro de dépôt : **88400273.4**

(22) Date de dépôt : **05.02.88**

(54) **Siège réglable et rabattable, notamment pour véhicule.**

(30) Priorité : **12.02.87 FR 8701779**

(43) Date de publication de la demande :
**07.09.88 Bulletin 88/36**

(45) Mention de la délivrance du brevet :
**05.06.91 Bulletin 91/23**

(84) Etats contractants désignés :
**BE DE ES GB IT NL SE**

(56) Documents cités :
**CH-A- 133 976
FR-A- 2 290 175
FR-A- 2 373 255
FR-E- 39 135
GB-A- 2 019 208
GB-A- 2 099 691**

(73) Titulaire : **ECIA - EQUIPEMENTS ET
COMPOSANTS POUR L'INDUSTRIE
AUTOMOBILE
F-25400 Audincourt (Doubs) (FR)**

(72) Inventeur : **Bonnet, Marc
décédé (FR)**
Inventeur : **Fourrey, François
34, rue du Petit Chênois
F-25200 Montbeliard (FR)**
Inventeur : **Roulleau, Jean-Michel
18, rue du 152ième RI
F-25420 Voujeaucourt (FR)**

(74) Mandataire : **Mestre, Jean et al
c/o CABINET LAVOIX 2, place d'Estienne
d'Orves
F-75441 Paris Cédex 09 (FR)**

EP 0 281 445 B1

## Description

Les exigences de plus en plus grandes du confort des usagers des véhicules et notamment des véhicules automobiles, ont amené les constructeurs à réaliser un grand nombre de types de sièges réglables dont la position du dossier et/ou de l'assise peut être modifiée à tout moment. Il est par ailleurs nécessaire dans certains véhicules de disposer de sièges dont le dossier peut être rabattu sur l'assise pour permettre l'accès aux places situées derrière et/ou dont l'assise peut être soulevée pour faciliter l'accès aux places voisines, car l'espace disponible est restreint. Or, en raison même de ce manque de place, la combinaison, sur un même siège, du système de rabattement et des mécanismes de réglage d'inclinaison pose de graves problèmes de réalisation dus en particulier à l'importance de la place occupée sous le siège par les organes de commande et à la complexité de ces derniers.

Le document GB-A-2 099 691 concerne un siège réglable et rabattable notamment pour véhicule. Ce siège comprend un support monté sur le sol ainsi qu'une armature d'assise et une armature de dossier portées toutes deux par ce support. Les deux armatures sont articulées l'une sur l'autre par un axe, l'armature de dossier est articulée sur le support par un axe mobile en translation permettant le rabattement et l'armature d'assise est aussi articulée sur le support par un axe mobile en translation qui la lie à ce dernier de manière à ne permettre qu'une translation de l'assise sans la moindre possibilité de relevage de cette dernière.

Le document FR-A-2 290 175 concerne un siège réglable et rabattable notamment pour véhicule. Ce siège comprend un support monté sur le sol ainsi qu'une armature d'assise et une armature de dossiers portées toutes deux par ce support. Les deux armatures sont articulées l'une sur l'autre par un axe, l'armature et le dossier est articulée sur le support par un axe fixe permettant le rabattement et l'armature d'assise est reliée au support par un axe fixe permettant seulement une translation de l'assise sans la moindre possibilité de relevage de cette dernière.

La présente invention a pour but de remédier à ces inconvénients en fournissant un siège réglable et rabattable tout particulièrement adapté à tous les cas où l'espace disponible est restreint.

Le siège selon l'invention est d'un type exposé dans le préambule de la revendication principale et connu par exemple de GB-A-2 099 691, et dont les particularités figurent notamment dans la partie caractérisante de celle-ci.

Grâce à cette disposition, le dossier est repoussé vers l'avant en même temps qu'il est rabattu sur l'assise, ce qui assure un grand dégagement vers l'arrière, tandis que l'assise peut être repliée sur le dossier pour dégager le passage à l'avant du siège. Des positions diverses d'inclinaison du dossier et de l'assise peuvent par ailleurs être obtenues autour de l'axe de pivotement.

La description ci-dessous d'un mode de réalisation, donné à titre d'exemple non limitatif et représenté aux dessins annexés, fera d'ailleurs ressortir les avantages et caractéristiques de l'invention.

Sur ces dessins :
– la Fig. 1 est une vue en perspective montrant la structure d'armature du siège selon l'invention en position sur son support.
– la Fig. 2 est une vue partielle de coté à plus grande échelle de la partie arrière du support ;
– la Fig. 3 est une vue en coupe suivant la ligne 3-3 de la Fig. 2 ;
– la Fig. 4 est une vue schématique de coté montrant le siège dans deux positions de réglage différentes ;
– la Fig. 5 est une vue analogue à la Fig. 4 du siège rabattu vers l'avant ;
– la Fig. 6 est une vue analogue aux Figs. 4 et 5 montrant l'assise du siège repliée sur le dossier ;
– la Fig. 7 est une vue de côté d'un dispositif de réglage de la hauteur de l'avant de l'assise.

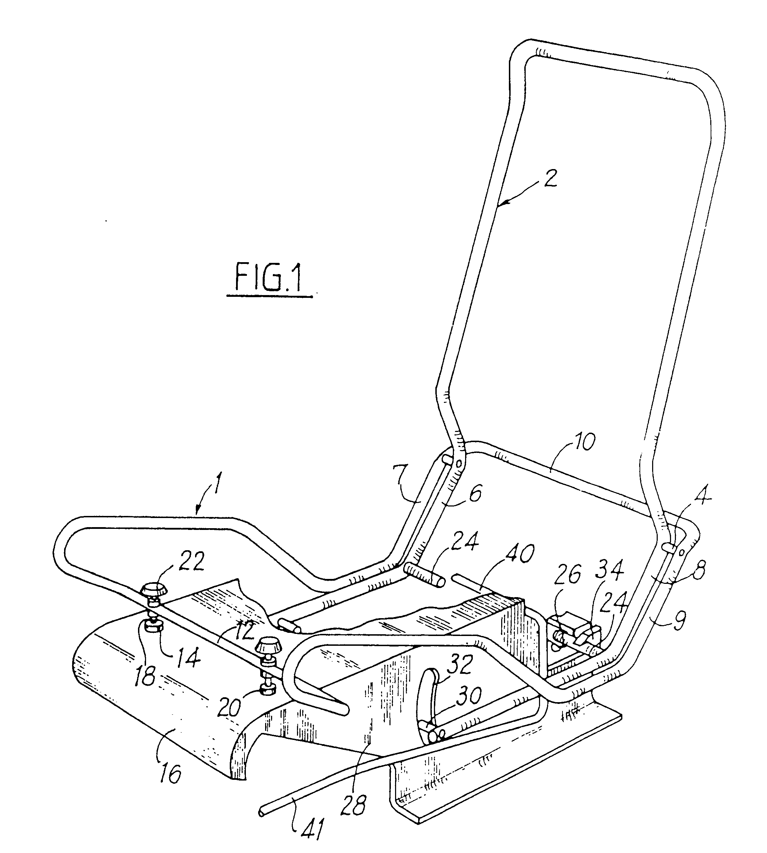

La structure de siège représentée sur la Fig. 1 comporte une armature d'assise 1 ayant une forme générale rectangulaire et une armature de dossier 2 ayant une forme générale en U. Ces deux armatures sont formées par des tubes dans le mode de réalisation représenté et elles sont articulées entre elles au moyen d'axes 4 fixés sur les branches latérales, respectivement 6 et 8, du U du dossier et dans les branches latérales 7, 9 de l'assise, au voisinage de sa barre arrière 10.

A son extrémité opposée l'armature d'assise 1 comporte une barre 12 parallèle à la barre 10 qui appuie par l'intermédiaire de patins 14 sur un support 16 monté sur le sol par exemple monté sur le plancher du véhicule. Les patins 14 sont de préférence fixés à l'extrémité d'une vis 18 traversant un écrou 20 monté dans la barre 12 et reliée à l'extérieur de cette dernière à un organe de commande 22 permettant le réglage de la distance entre le patin 14 et la barre 12, c'est à dire la hauteur de cette barre par rapport au support 16.

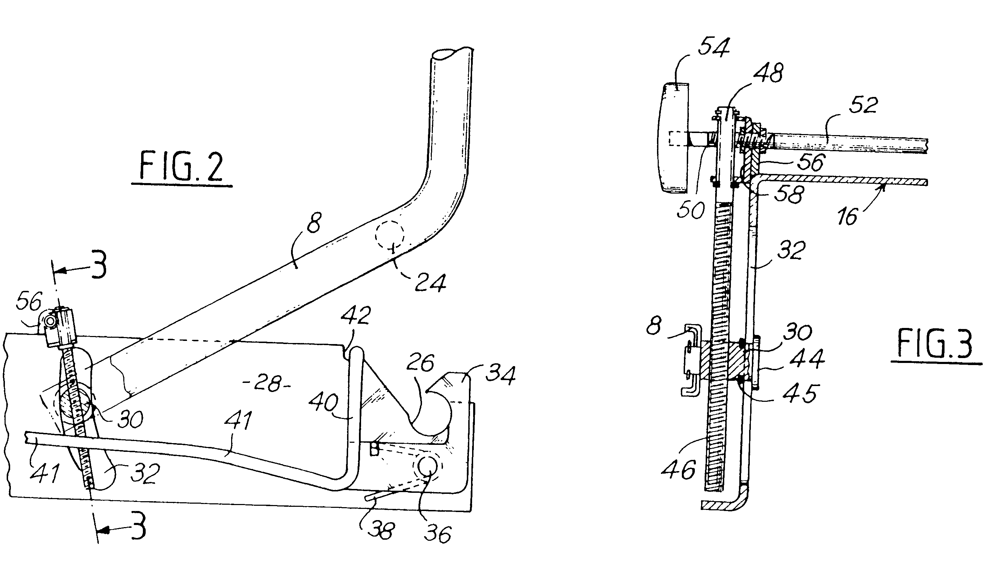

L'armature 2 du dossier est également montée sur le support 16. Chacune des branches 6 et 8 de cette armature se prolonge en effet en dessous de l'axe 4 et porte d'abord un axe 24 qui est logé dans une encoche 26 de la paroi latérale 28 du support 16, puis, à son extrémité, un axe 30 qui traverse une lumière 32 ménagée dans cette même paroi latérale 28 du support 16 nettement en avant de l'encoche 26 (Fig.2).

L'axe 24 est immobilisé dans l'encoche 26 grâce à un crochet 34 qui est monté pivotant sur la paroi 28, en dessous de l'encoche 26, autour d'un axe 36 mais est rappelé dans sa position de verrouillage par un ressort en épingle 38 fixé d'une part sur la paroi 28 et d'autre part sur le crochet 34. Les crochets 34 des deux côtés sont solidaires d'une tige 40 qui est coudée en U pour pénétrer dans une encoche 42 de la partie supérieure du support et traverser toute la largeur de celui ci. A une extrémité cette tige 40 est prolongée vers l'avant pour former une tige de manoeuvre 41 qui commande le déplacement rigoureusement simultané des deux crochets 34, et par suite le déverrouillage des deux axes de pivotement 24 en parfait synchronisme.

L'axe 30 fixé à l'extrémité de chacune des branches 6 et 8 est bloqué axialement contre la paroi latérale 28 du flasque 16 de part et d'autre de la lumière 32, par exemple, comme représenté sur la Fig. 3, grâce à une extrémité élargie 44 et à un joint d'arrêt 45. Cet axe 30 est toutefois libre de se déplacer le long de la lumière 32 sous l'action d'un dispositif d'entraînement qui comporte un trou taraudé percé diamétralement dans l'axe 30 et en prise avec une tige filetée 46 dont l'extrémité supérieure porte un pignon 48 en prise avec un filetage 50 d'une tige de commande 52. La tige de commande 52 est munie à l'une de ses extrémités d'un bouton de manoeuvre 54 et traverse de préférence toute la largeur du support 16 de façon à relier entre eux les pignons 48 des deux côtés du siège. Elle est portée à chacune de ses extrémités par une patte 56 solidaire de la surface supérieure du support 16, et par un étrier 58 de support du pignon 48 et par suite de la tige 46, dans lesquels elle peut tourner librement tout en étant immobilisée axialement.

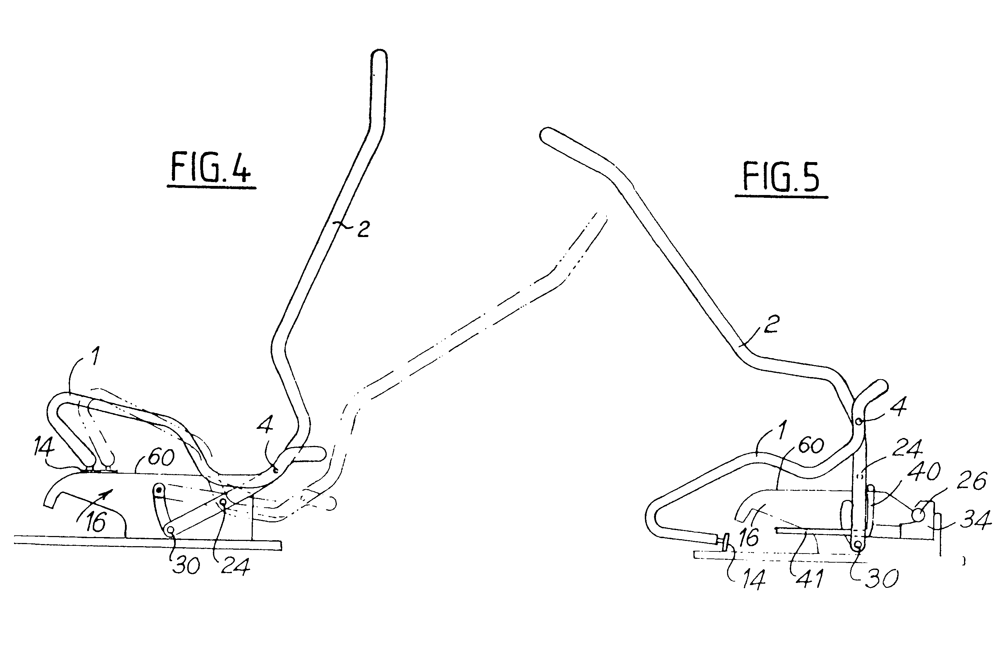

Toute rotation du bouton de manoeuvre 54 entraînant celle de la tige 52 fait ainsi tourner le pignon 48 et par suite la tige filetée 46 et provoque le déplacement, vers le haut ou vers le bas, de l'axe 30. L'extrémité inférieure de l'armature 2 du dossier est alors soulevée ou abaissée dans la lumière 30, ce qui provoque le pivotement de l'armature autour des axes 24 lorsque ceux ci sont vérrouillés. Le dossier du siège peut ainsi pivoter entre la position redressée représentée en trait plein sur la Fig. 4 et la position sensiblement couchée représentée en trait mixte sur cette même figure et être immobilisée dans ces deux positions ou au choix dans toute position intermédiaire désirée. Ce pivotement du dossier provoque celui des axes 4 d'articulation de l'assise de la même manière autour des axes 30 de sorte que la partie arrière de l'assise effectue un mouvement analogue à celui du dossier, c'est à dire s'abaisse et se soulève en même temps que lui. Le mouvement vers le bas de l'assise est accompagné d'un déplacement vers l'arrière de sorte que la barre transversale avant 12 recule et que les patins 14 glissent sur la surface supérieure 60 du support 16. Inversement le soulèvement de l'arrière de l'assise lors du redressement du dossier fait glisser les patins 16 vers l'avant. L'ensemble du siège peut ainsi être déformé et prendre une position assise ou sensiblement couchée selon le désir de l'utilisateur, la position de l'assise s'adaptant à celle du dossier.

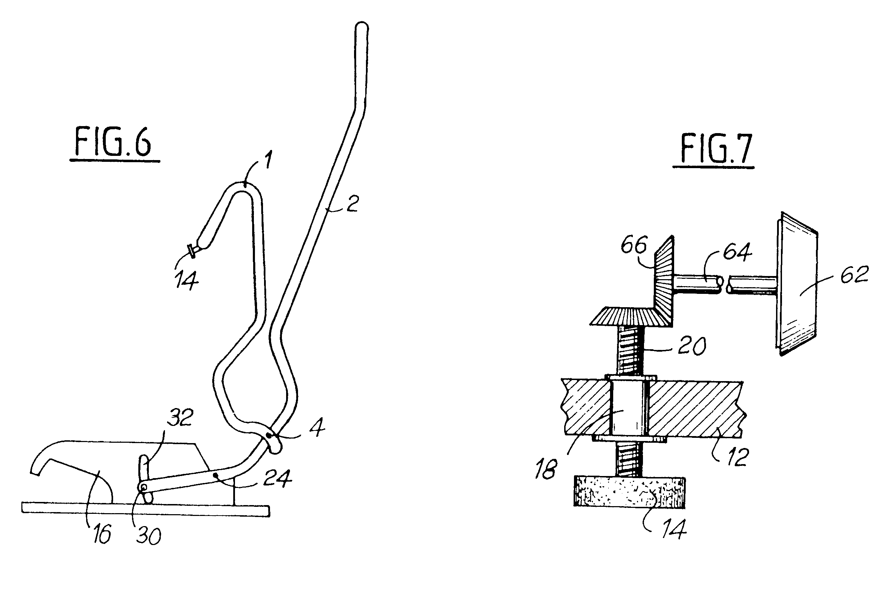

Lorsque l'on désire avoir accès à l'espace situé à l'arrière il suffit de déverrouiller les axes 24 en faisant pivoter les crochets 34 au moyen de la tige 41 puis, de repousser le dossier 2 vers l'avant pour le faire pivoter autour des axes 30 qui jouent alors le rôle d'axes de basculement. L'ensemble de l'armature du dossier y compris les axes de pivotement 24 pivotent alors autour de ces axes 30 jusqu'à prendre la position représentée sur la Fig. 5, dans laquelle le dossier est non seulement rabattu vers l'avant mais est écarté de la partie arrière du support 16 de sorte qu'il libère le maximum de place. Dans son déplacement le dossier 2 entraîne bien entendu l'assise 1 qui est repoussée vers l'avant de sorte que les patins 14 glissent sur la surface supérieure 60 du support 16 et continuent même au delà, éventuellement jusqu'au sol. L'assise a alors tendance à s'incliner vers l'avant ce qui facilite le rabattement du dossier sur elle.

Lors du redressement du dossier 2 les patins 14 reprennent leur position en appui sur le support 16 et les axes 24 en pivotant à nouveau vers l'arrière retournent en direction de l'encoche 26. Ils viennent alors buter contre l'extrémité du crochet 34 correspondant, qu'ils repoussent en l'obligeant à pivoter autour de l'axe 36 jusqu'au moment ou il leur permet de pénétrer dans l'encoche 26. Le ressort 38 ramène alors le crochet 34 dans sa position de verrouillage et le siège est à nouveau prêt à être utilisé.

Le siège dans cette position verrouillée peut facilement permettre un accès à la place voisine par repliage de l'assise 1 contre le dossier 2 puisque l'avant de cette assise est simplement en appui sur le support 16 et peut en conséquence être soulevé à tout moment pour pivoter autour des axes d'articulation 4 et être relevé comme le montre la Fig. 6.

Le siège ainsi obtenu peut donc à volonté être rabattu, replié ou réglé pour recevoir l'inclinaison ou la position la plus agréable pour son usager, et ne comporte cependant que des organes extrèmement simples qui laissent entièrement libre tout l'espace délimité par le support. Les seuls organes de commande qui traversent l'ensemble de la structure du siège sont en effet les tiges de commande 40 et 52 qui sont situées au dessus de ce support 16.

Il est bien évident que le support 16 qui a été décrit comme s'étendant sur toute la largeur de la structure du siège peut, si désiré, être constitué par deux longerons latéraux reliés chacun à l'un des côtés des armatures du dossier et de l'assise. De la même manière le support 16 peut être fixe ou être constitué par un chariot relié au sol, par exemple au plancher du véhicule, par un système de glissière longitudinale permettant un réglage de la position de l'ensemble de la structure du siège.

Il sera également clair que le nombre des patins d'appui 14 peut varier en fonction de la forme du support et de celle de l'armature d'assise et qu'il peut dans certain cas être avantageux de remplacer la bouton de manoeuvre 22 fixé à l'extrémité de la tige filetée 20 par un autre système de commande par exemple par un bouton 62 porté par l'extrémité d'une tige 64 reliée à la tige 20 par un renvoi d'angle 66 comme représenté sur la Fig. 7, ou par tout autre système approprié.

## Revendications

1. Siège réglable et rabattable, notamment pour véhicule, comprenant un support (16) monté sur le sol et une armature d'assise (1) et une armature de dossier (2) portées toutes deux par ce support (16), ces armatures (1, 2) étant articulées l'une sur l'autre par un axe (4) et l'armature de dossier (2) étant articulée sur ce support (16) par un axe (30) de basculement mobile permettant le rabattement, caractérisé en ce que l'armature de dossier (2) est articulée en outre sur le support (16) par un axe (24) de pivotement, en ce que cet axe de pivotement (24) est mobile, et en ce que l'armature de l'assise (1) est en simple appui coulissant sur le support (16) de manière à pouvoir être relevée seule relativement à ces support (16) et armature de dossier (2) par rotation selon l'axe (4).

2. Siège suivant la revendication 1, caractérisé en ce que l'axe de pivotement (24) de l'armature du dossier sur le support est situé en dessous de l'axe d'articulation (4) du dossier sur l'assise.

3. Siège suivant l'une des revendications 1 et 2, caractérisé en ce que l'axe de pivotement (24) est maintenu sur le support (16) par un verrou escamotable (34) et peut être libéré, et pivoter autour d'un axe de basculement (30) situé nettement en avant des axes de pivotement et d'articulation.

4. Siège suivant l'une des revendications précédentes, caractérisé en ce que l'armature du dossier (2) est prolongée en dessous de l'axe de pivotement (24) et porte l'axe de basculement (30) qui est mobile dans une lumière (32) du support et est reliée à une commande de l'inclinaison du dossier.

5. Siège suivant l'une des revendications précédentes, caractérisé en ce que l'armature du dossier (2) comporte deux bras latéraux (6 et 8) qui portent chacun un axe d'articulation (4), un axe de pivotement (24) et un axe de basculement (30).

6. Siège suivant l'une des revendications précédentes, caractérisé en ce que l'armature d'assise (1) porte à l'avant au moins un patin (14) d'appui sur le support (16), qui glisse sur ce dernier au fur et à mesure du déplacement de pivotement ou de basculement du dossier.

7. Siège suivant la revendication 6, caractérisé en ce que chaque patin d'appui (14) est relié à la barre avant (12) de l'armature d'assise par l'intermédiaire d'un dispositif (18, 20) de réglage de sa distance par rapport à cette barre.

8. Siège suivant l'une des revendications 4 à 7, caractérisé en ce que le verrou escamotable de retenue de l'axe de pivotement est constitué par un crochet (34) pivotant sur le support (16) et rappelé élastiquement en position de verrouillage.

9. Siège suivant l'une des revendications précédentes, caractérisé en ce que le support (16) est un chariot mobile en translation par rapport au sol qui le supporte.

10. Siège suivant l'une des revendications précédentes, caractérisé en ce que le support (16) est formé par deux longerons parallèles espacés.

## Ansprüche

1. Verstellbarer und umlegbarer Sitz, insbesondere für Fahrzeuge, bestehend aus einem auf dem Boden montierten Halter (16) und einem Sitzflächengestell (1) und einem Rückenlehnengestell (2), die beide von dem Halter (16) getragen sind und über eine Achse (4) aneinander angelenkt sind, wobei das Rückenlehnengestell (2) an dem Halter (16) über eine bewegliche Kippachse (30) angelenkt ist, die die Umlegung gestattet, dadurch gekennzeichnet, daß das Rückenlehnengestell (2) außerdem an dem Halter (16) über eine Schwenkachse (24) angelenkt ist, daß die Schwenkachse (24) beweglich ist und daß das Sitzflächengestell (1) auf dem Halter (16) einfach verschiebbar aufliegt, so daß sie allein bezüglich des Halters (16) und des Rückenlehnengestells (2) durch Drehung um die Achse (4) angehoben werden kann.

2. Sitz nach Anspruch 1, dadurch gekennzeichnet, daß die Schwenkachse (24), um die das Rückenlehnengestell an dem Halter schwenkbar ist, unterhalb der Gelenkachse (4) gelegen ist, über die die Rückenlehne an der Sitzfläche angelenkt ist.

3. Sitz nach einem der Ansprüche 1 und 2, dadurch gekennzeichnet, daß die Schwenkachse (24) an dem Halter (16) durch einen wegrückbaren Riegel (34) gehalten ist und freigegeben und um eine Kippachse (30) verschwenkt werden kann, die weit vor der Schwenkachse und der Gelenkachse angeordnet ist.

4. Sitz nach einem der vorhergehenden Ansprüche, dadurch gekennzeichnet, daß das Gestell (2) der Rückenlehne unter die Schwenkachse (24) verlängert ist und die Kippachse (30) trägt, die in einer Aussparung des Halters beweglich ist und mit einer Steuerung der Rückenlehnenneigung verbunden ist.

5. Sitz nach einem der vorhergehenden Ansprüche, dadurch gekennzeichnet, daß das Gestell (2) der Rückenlehne zwei seitliche Arme (6 und 8) aufweist, deren jeder eine Gelenkachse (4), eine Schwenkachse (24) und eine Kippachse (30) trägt.

6. Sitz nach einem der vorhergehenden Ansprüche, dadurch gekennzeichnet, daß das Sitzflächengestell (1) mindestens vorne einen Fuß (14) zur Auflage auf dem Halter (16) trägt, der auf diesem im Maße der Schwenk- oder Kippbewegung der Rückenlehne gleitet.

7. Sitz nach Anspruch 6, dadurch gekennzeichnet, daß jeder Auflagefuß (14) mit der vorderen Stange (12) des Sitzflächengestells über eine Vorrichtung (18, 20) zur Einstellung seines Abstandes von dieser Stange verbunden ist.

8. Sitz nach einem der Ansprüche 4 bis 7, dadurch gekennzeichnet, daß der wegrückbare Riegel zur Verriegelung der Schwenkachse aus einem an dem Halter (16) angelenkten Haken (34) besteht, der elastisch in die Verriegelungsstellung zurückgeholt ist.

9. Sitz nach einem der vorhergehenden Ansprüche, dadurch gekennzeichnet, daß der Halter (16) ein bezüglich des ihn tragenden Bodens geradlinig beweglicher Schlitten ist.

10. Sitz nach einem der vorhergehenden Ansprüche, dadurch gekennzeichnet, daß der Halter (16) aus zwei zueinander parallelen und in einem Abstand voneinander angeordneten Holmen gebildet ist.

## Claims

1. Adjustable and tiltable seat, in particular for a vehicle, comprising a support (16) mounted on the floor and a seat cushion frame (1) and a seatback frame (2), both of which rest on this support (16), these frames (1, 2) being hinged relative to each other about a shaft (4), and the seatback frame (2) being hinged on this support (16) about a movable tipping shaft (30) enabling the seat to be tipped up, characterised in that the seatback frame (2) is further hinged on the support (16) about a pivot shaft (24) ; in that this pivot shaft (24) is movable ; and in that the seat cushion frame (1) rests in a simple sliding manner on the support (16) such that it may be raised independently relative to this support (16) and seatback frame (2) by rotation about the shaft (4).

2. Seat according to claim 1, characterised in that the shaft (24) about which the seatback frame pivots on the support is situated below the shaft (4) about which the seatback is hinged on the seat cushion.

3. Seat according to any one of claims 1 and 2, characterised in that the pivot shaft (24) is retained on the support (16) by a retractable latch (34) and may be released and pivot around a tipping shaft (30) situated substantially in front of the pivot and hinge shafts.

4. Seat according to one of the preceding claims, characterised in that the seatback frame (2) is extended below the pivot shaft (24) and supports the tipping shaft (30) which is movable within a slot (36) in the support and is connected to a device for controlling the inclination of the seatback.

5. Seat according to one of the preceding claims, characterised in that the seatback frame (2) comprises two lateral arms (6 and 8) each carrying a hinge shaft (4), a pivot shaft (24) and a tipping shaft (30).

6. Seat according to one of the preceding claims, characterised in that the seat cushion frame (1) has, at the front, at least one support pad (14) on the support (16), which slides over the latter as the seatback moves in a pivoting or tipping manner.

7. Seat according to claim 6, characterised in that each support pad (14) is connected to the front bar (12) of the seat cushion frame by a device (18, 20) which adjusts the distance thereof from the said bar.

8. Seat according to any one of claims 4 to 7, characterised in that the retractable latch which retains the pivot shaft consists of a hook (34) which pivots on the support (16) and returns resiliently to the locking position.

9. Seat according to any one of the preceding claims, characterised in that the support (16) is a carriage displaceable relative to the floor which supports it.

10. Seat according to any one of the preceding claims, characterised in that the support (16) is formed by two longitudinal parallel spaced bars.

FIG.1

# FIG.2

# FIG.3

EP 0 281 445 B1

FIG.4

FIG.5

~2

1

14

60

4

16

30    24

2

1    60

4

24

40    26

34

16

14    41    30

EP 0 281 445 B1

8

FIG.7

FIG.6